# EUROPEAN PATENT APPLICATION

(11) **EP 3 643 840 A2**
(43) Date of publication of application: **29.04.2020**
(21) Application number: 18820738.5
(22) Date of filing: 22.06.2018
(51) Int. Cl.: E02F 3/88, B01D 21/00, E04H 4/16

(54) **DEVICE FOR CLEANING THE BOTTOM OF WATER-HOLDING SPACES**

(30) Priority: 24.06.2017 ES 201730837
(71) Applicant: Aquatic Sweeper, S.L., 39409 San Felices de Buelma (ES)
(72) Inventor: GÓMEZ VALLEJO, Jorge, 39409 San Felices de Buelma (ES)
(74) Representative: García Gómez, José Donato
(86) International application number: PCT/ES2018/070444
(87) International publication number: WO 2018/234606

(57) **Abstract**

A device for cleaning the bottom of water-holding spaces, which can be used to clean the bottoms of artificial constructions, comprising: a bottom-cleaning carriage (1) provided with: wheels (11) such that the carriage can move along the bottom; a chamber (12) with a lower opening; at least one sweeper brush (13) and water suction and filtering means. The bottom-cleaning carriage (1) is coupled by means of push poles (3) to an unmanned watercraft (2) provided with an electrically powered motor (21) and control means (23) allowing the watercraft to move and the bottom-cleaning carriage (1) to be pushed along the bottom. The carriage comprises a suction pump (14) and suction pipes (151) which suck water into two consecutive zones located behind the sweeper brush.

## Description

### Object of the invention

The object of the invention is a device for cleaning the bottom of water-holding spaces and, in particular. for the bottoms of artificial constructions containing large masses of water, such as: artificial lakes, ornamental fountains, ponds or large swimming pools.

This cleaning device comprises a bottom-cleaning carriage moveable along the bottom of the water-holding space to be cleaned and an unmanned watercraft responsible for pushing the bottom-cleaning carriage by means of poles along the bottom of the water-holding space. Said watercraft comprises a motor and control means for its movement, and said bottom-cleaning carriage comprises means for performing a double cleaning of the bottom of the water-holding space through suction and filtering of the water.

### State of the art

National invention patent application P201630800, of the same holder as the present invention, describes a cleaning device for the bottom of water-holding spaces, applicable to the cleaning of bottoms of artificial constructions containing large masses of water, such as: artificial lakes, ornamental fountains, ponds, or large swimming pools.

Said device comprises: - a bottom-cleaning carriage provided with: wheels for it to move along the bottom; a suction chamber provided with a lower opening, and brushes for removing the dirt on the bottom of the water-holding space; and - a hose comprising: on one first end, a connection part to a water propulsion system belonging to or installed on a watercraft; in an intermediate zone, a narrowing provided with a connection tube to the suction chamber of the bottom-cleaning carriage, said connection tube performing the suction, by Venturi effect, of the water and dirt on the bottom of the water-holding space; and, on a second end, a filter connected to the bottom-cleaning carriage for retaining the dirt suctioned from the bottom of the water-holding space and for releasing filtered water.

Although this cleaning device perfectly fulfils the purpose for which it was designed, the applicant has developed a water-bottom cleaning device that has features aimed at controlling the movement of the cleaning carriage along the bottoms of water-holding spaces of different heights, increasing the cleaning performance, incorporating in the carriage itself cleaning means that do not require its connection by hose to a jet ski or other similar vehicle, and using an unmanned watercraft as a means for moving or pushing the cleaning carriage.

### Description of the invention

The water-bottom cleaning device object of this invention comprises a bottom-cleaning carriage provided with: wheels for its movement along the bottom of the water-holding space; a chamber with a lower opening and at least one sweeper brush, oriented transversely and arranged in a leading zone of the bottom-cleaning carriage taking as reference the direction of advancement of the carriage; said cleaning device having features aimed at improving the aforementioned aspects.

According to the invention, the bottom-cleaning carriage is coupled, by means of push poles, to an unmanned watercraft responsible for pushing the bottom-cleaning carriage along the bottom of the water-holding space, the watercraft having an electrically powered motor and control means for its movement.

The bottom-cleaning carriage comprises a suction pump electrically powered from the watercraft. Said suction pump comprises a suction inlet facing towards the lower zone and which sucks water from a zone located behind the transversal brush and pushes it through a manifold provided with a series of suction pipes that perform, by Venturi effect, a suction of water and dirt in a zone comprised between the suction inlet of the pump and the sweeper brush.

In this way, the bottom-cleaning carriage performs a double suction in two consecutive zones, increasing the cleaning performance; specifically:
- a first suction, by Venturi effect, through the suction pipes in a zone immediately behind the sweeper brush and
- a second suction through the pump suction inlet in a zone located behind the suction pipes, and thus further away from the sweeper brush.

According to the invention, the push poles are attached to the watercraft and the bottom-cleaning carriage by means of joints that allow them to vary their inclination based on the depth of the bottom of the water-holding space.

In this invention, it has been provided that the aforementioned joints do not allow a lateral rotation of the push poles, so that the movement of the watercraft is transmitted in a longitudinal direction to the bottom-cleaning carriage.

In one embodiment of the invention, the aforementioned watercraft incorporates batteries for electrically powering the vessel thrust motor and the suction pump incorporated in the bottom-cleaning carriage.

It is worth mentioning that this vessel, being unmanned, can be of more or less reduced dimensions and of low constructive complexity.

This vessel incorporates suitable control means so as to be able to move autonomously and automatically or remotely.

The electric drive of both the suction pump and the watercraft, without the intervention of explosion motors, provides the cleaning device with advantages of use, the most important of which are that it is eco-friendly, non-polluting and silent in operation.

### Description of the figures

In order to complement the description that is being carried out and with the purpose of facilitating the understanding of the features of the invention, the present description is accompanied by a set of drawings wherein, by way of a non-limiting example, the following has been represented:
- Figure 1 shows a schematic elevational view of an exemplary embodiment of the device for cleaning the bottom of water-holding spaces according to the invention, in which the bottom-cleaning carriage coupled to the unmanned watercraft by means of push poles can be seen.
- Figure 2 shows a bottom plan view of the bottom-cleaning carriage.

### Preferred embodiment of the invention

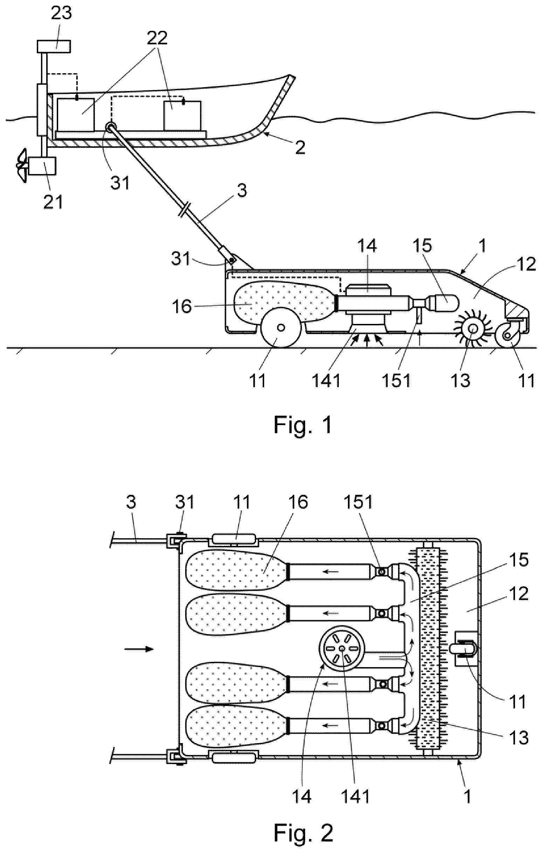

In the exemplary embodiment shown in Figure 1, the cleaning device comprises a bottom-cleaning carriage (1) provided with: wheels (11) for movement along the bottom of the water-holding space to be cleaned; a chamber (12) open towards the lower zone; and a sweeper brush (13) for removing dirt from the bottom of the water-holding space.

This bottom-cleaning carriage (1) is coupled to an unmanned watercraft (2) by push poles (3) that transmit the movement of the watercraft to said bottom-cleaning carriage.

Said push poles (3) have at their ends joints (31) that allow their tilting, varying the inclination of said poles based on the depth of the bottom of the water-holding space to be cleaned.

The bottom-cleaning carriage (1) comprises a suction pump (14) electrically powered by batteries (22) housed in the watercraft (2).

Said suction pump (14) comprises a suction inlet (141) facing towards the lower zone and which sucks water from a zone located behind the sweeper brush (13) and forces it towards filters (16) through a manifold (15) provided with a series of suction pipes (151) that perform, by Venturi effect, a suction of water and dirt in a zone comprised between the suction inlet (141) of the suction pump (14) and the sweeper brush (13).

In this way, the bottom-cleaning carriage performs a first suction, by Venturi effect, through the suction pipes (151) in a zone immediately behind the sweeper brush (13); and - a second suction through the suction inlet (141) of the pump in a zone located behind the suction pipes (15); increasing the cleaning performance of the device. The dirt sucked together with the water is retained in filters (16) that allow the outflow of the filtered water.

The watercraft (2) has driving means, represented by the motor (21) electrically powered by the batteries (22) and control means (23) suitable for automatically or remotely controlling the movement of the watercraft.

Once the nature of the invention as well as an example of preferred embodiment have been sufficiently described, it is stated for all pertinent purposes that the materials, form, size and arrangement of the elements described are susceptible to changes, provided these do not involve an alteration of the essential features of the invention which are claimed below.

## Claims

1. A device for cleaning the bottom of water-holding spaces, applicable to the cleaning of bottoms of artificial constructions, comprising: a bottom-cleaning carriage (1) provided with: wheels (11) for its movement along the bottom of the water-holding space; a chamber (12) with a lower opening; at least one sweeper brush (13) and water suction and filtering means; **characterised in that** the bottom-cleaning carriage (1) is coupled by means of push poles (3) to an unmanned watercraft (2) provided with an electrically powered motor (21) and control means (23) for moving and pushing the bottom-cleaning carriage (1) along the bottom of the water-holding space.

2. The device, according to claim 1 **characterised in that** the bottom-cleaning carriage (1) comprises a suction pump (14) provided with a suction inlet (141) facing the lower zone and located behind the sweeper brush (13) and that forces the sucked water into filters (16) through a manifold (15) provided with a series of suction pipes (151) that perform a suction of water and dirt, by Venturi effect, in a zone between the suction inlet (141) of the suction pump (14) and the sweeper brush (13).

3. The device, according to claim 1 **characterised in that** the push poles (3) are attached to the watercraft (2) and the bottom-cleaning carriage (1) by means of joints (31) that allow the inclination of the push poles based on the depth of the bottom of the water-holding space and prevent the lateral rotation of said push poles (3).

4. The device according to claim 1 **characterised in that** the watercraft incorporates batteries for electrically powering the motor (22) of the vessel (2) and of the suction pump (14) of the bottom-cleaning carriage (1).
